# EUROPEAN PATENT SPECIFICATION

(11) **EP 3 593 223 B1**
(45) Date of publication and mention of the grant of the patent: **25.08.2021**
(21) Application number: 18718683.8
(22) Date of filing: 14.03.2018
(51) Int. Cl.: G06F 1/16, H04N 5/65

(54) **PRIVACY SCREEN FILTER**
ABSCHIRMUNGSFILTER FÜR PRIVATSPHÄRE
FILTRE D'ÉCRAN DE CONFIDENTIALITÉ

(30) Priority: 15.03.2017 DK PA201770183; 24.04.2017 DK PA201770276
(43) Date of publication of application: 15.01.2020
(73) Proprietor: PANZER GLASS A/S, 8382 Hinnerup (DK)
(72) Inventor: GUDSØE, Mikkel, 8250 Egå (DK)
(74) Representative: Patrade A/S
(86) International application number: PCT/DK2018/050045
(87) International publication number: WO 2018/166570

(56) References cited:
- US-A1- 2006 198 087
- US-A1- 2009 115 943
- US-A1- 2011 182 029
- US-A1- 2015 009 399
- US-B1- 8 885 110
- US-B1- 9 097 382

## Description

### Field of the Invention

The present invention concerns a privacy screen filter for mounting on screens of computers, including particularly screens on portable computers such as laptops and/or tablet pcs, on which a camera and/or a sensor is mounted in the computer screen, such as in the edge frame of the screen, and wherein the screen filter includes a filter element in the form of a film sheet with means to prevent other than the user to see the contents on the screen, such as a film sheet including micro-lamellae and one or more mounting means for releasable fastening of the screen filter along at least one edge of the screen, wherein the screen filter additionally includes one or more reinforcing plate-shaped elements mounted along the front side and/or the back side of the upper and lower edges of the film sheet or of the side edges of the film sheet, and preferably across the entire width and height, respectively, of the film sheet for reinforcing the film sheet.

### Background of the Invention

It is common to use computers, in particular portable computers or laptops, in many connections, and often they are used in public areas as well where it is possible for others to see the display on the screen if they are in the vicinity of the user of the portable computer.

If the user of a laptop desires to exclude others from looking at the screen, it is possible to mount a privacy screen filter. A privacy screen filter is a film or similar which is made with vertical micro-lamellae that prevent persons standing or sitting beside the laptop user from seeing the contents on the screen and reading/seeing potentially confidential data shown on the screen. The user himself has a clear screen image when the screen is viewed from a position largely perpendicular to the screen.

It is common that these screen filters are mounted on the screen by adhesive pads, Velcro® bands, where one part of the Velcro band, e.g. the hook part, is mounted on the edges of the screen and the other part, e.g. the loop part, is mounted on the edge(s) of the screen filter. Alternatively, on the edge of the screen there may be fitted glued holders behind which the screen filter can be pushed down behind for mounting on the computer screen.

These mounting systems all have the disadvantage that glued elements leave marks and glue remains on the screen edge when removed.

Moreover, these glued mounting systems for privacy screen filters are not aesthetically attractive, and they are also prone to falling off again after some time of use.

US 2007253065 discloses parts of a privacy screen filter of the kind mentioned in the introduction. This screen filter is not suited for safeguarding against misuse of a camera and/or sensor mounted in the computer screen.

US 9 097 382 B1 discloses a privacy screen filter of the kind mentioned in the introduction. This screen filter is also not suited for safeguarding against misuse of a camera and/or sensor mounted in the computer screen.

### Object of the Invention

It is the object of the invention to provide a more secure privacy screen filter than those known today, and which also can prevent misuse of a camera and/or sensor mounted in the computer screen.

Furthermore, it is an object to provide an alternative way of mounting such privacy screen filters on computer screens, including in particular portable computers or laptops, ensuring effective mounting of the screen filter without application of solutions based on adhesives.

It is also an object of the invention to provide an aesthetically attractive solution for mechanically fixing a screen filter on a computer screen, in particular on portable computers such as laptops or tablet pcs.

Moreover, it is the object to provide a mechanical fixing of a screen filter on a computer screen, particularly on portable computers such as laptops or tablet pcs, where it is easy to dismount or store the screen filter when not in use.

### Description of the Invention

These objects are achieved by a privacy screen filter according to claim 1. The privacy screen filter according to the invention is peculiar in that the reinforcing plate-shaped elements and the film sheet along at least one edge of the film sheet include a through-going hole, and that a movable slide is mounted in connection with the through-going hole as the movable slide can close the through-going hole or allow the through-going hole to be free.

Some portable computers have integrated cameras and/or other sensors in the computer screen, such as in the edge frame of the computer. If they are covered by the upper reinforcing plates of the screen filter, it is not possible for the user to use them. In order to ensure that a camera and/or possible sensors are not covered by the upper reinforcing plates of the screen filter, the upper reinforcing plates and the film sheet include at least one through-going hole going through all two or three layers. This through-going hole is disposed in an area in which a camera and/or a sensor is mounted in the computer screen, such as in the edge frame of the computer screen.

A movable slide is mounted at the through-going hole as the movable slide can close the through-going hole or allow the through-going hole to be free. The slide is arranged to slide back and forth or up and down in the through-going hole. When a slide is applied, the privacy filter will usually be made with two upper reinforcing edges.

By the slides it is achieved that the user can close the through-going hole and thereby ensure that the camera is not inadvertently used by others to monitor the user and his/her surroundings. In addition, it is safeguarded that possible faulty use of the camera function in the portable computer will not cause recording or showing of videos or images which the user does not want to the shown or e.g. transmitted via the internet to others. This provides further privacy security for the user.

The slide is preferably loosely placed in the through-going hole in the film sheet, having a thickness less than the thickness of the film sheet. The through-going hole in the film sheet is therefore preferably larger than the through-going holes in the front and rear upper reinforcing plates. The through-going hole in the film sheet therefore also has a size and a shape allowing the slide to be slid up/down or sideways back/forth, thereby freeing a substantial part of the through-going hole in front of camera and/or sensors, or covering the through-going hole in front of camera and/or sensors.

As an alternative, the back side of the foremost upper reinforcing plate can have a depression in the area around the through-going hole, allowing the slide to lie in the depression and be pushed back/forth or up/down for covering and opening, respectively, the through-going hole in front of the camera/sensors of the computer.

The slide preferably includes an control handle with a height exceeding the thickness of the foremost reinforcing plate so that the user can easily operate the slide and close or free the through-going hole in front of the camera and/or sensors.

In a first aspect of the invention, the mounting means include one or more hook elements, where the hook elements engage the upper edge of the film sheet or the reinforcing plate-shaped elements.

The hook elements are adapted to grip over the upper horizontal edge of the computer screen with a hook member and are thus adapted for releasable fastening of the screen filter at an upper edge of the computer screen.

By the engagement with the upper edge, the screen filter will hang stably on the upper edge of the computer screen. When speaking of an upper horizontal edge, in the present description is meant the upper edge which in normal use of the computer screen will be oriented approximately horizontally.

By the invention is achieved a privacy filter that is easy to mount on the computer screen without use of adhesive-based mounting means as described above. In addition, an aesthetically acceptable solution is achieved as there is no need for a permanent mounting of fastening means on the computer screen. The mounting means do not disfigure the computer thereby when the screen filter is not in used because the mounting means are mechanical and an integrated part of the screen filter, not leaving any trace on the computer when the screen filter is dismounted and not in use.

When the user does not want to use the screen filter, it can simply be taken off by lifting the hook members off the edge of the computer screen, or possibly pulling the screen filter aside in order to release the grip of the hook parts around the upper edge of the computer screen. It is also possible for the user to hang the screen filter at the back side of the computer screen such that the screen filter is suspended along the computer screen housing, e.g. on a laptop, when the computer screen filter is not to be used. This will facilitate storage of the screen filter, at least temporarily, in close vicinity to the laptop on which the screen filter is normally applied. Of course it is also possible to take the screen filter off and put it in a storage case, e.g. in the form of a separate pocket in a case for the portable computer.

In a further aspect of the invention, the mounting means include magnets. These magnets are used for retaining the screen filter on an edge area, either at the bottom and top or at the side edges. Some computers have a metallic frame or frame part that enables fastening of a magnet to the frame or a part of the frame.

Also hereby is achieved a privacy filter that is easy to mount on the computer screen without use of adhesive-based mounting means as described above. By magnetic mounting means an aesthetically acceptable solution is also achieved as there is no need for a permanent mounting of fastening means on the computer screen. The mounting means thereby do not disfigure the computer when the screen filter is not in use as the mounting means are magnets and an integrated part of the screen filter, not leaving any trace when the screen filter is dismounted and not in use.

The magnets used can be moulded into the filter or embedded in other ways in the reinforcing plate-shaped elements, preferably in a way such that they do not project above the surface of the reinforcing plate-shaped elements. Magnets can be completely embedded or mounted in holes such that the surface of the magnets is flush with the surface of the reinforcing plate-shaped elements. Hereby any risk of the magnets scratching the frame of the computer is avoided.

The magnets can be provided in one of the reinforcing plate-shaped elements or go through the reinforcing plate-shaped elements and the film sheet provided there between.

The magnets can be provided in the reinforcing plate-shaped elements at an upper edge of the screen filter or at both the upper and lower edges of the screen filter.

It is not necessary either to adapt the computer screen in order to be able to mount the screen filter without use of mounting means becoming visible when the screen filter is dismounted.

The screen filter includes a filter element in the form of a film sheet with means to prevent others than the user to see the contents on the computer screen. These are known and typically include a film sheet, e.g. of plastic, e.g. PET, polyethylene terephthalate. The film sheet has micro-lamellae that are angled such that the computer screen is completely visible if the user is situated largely at right angles in front of the computer screen, whereas the computer screen appears dark or black if the computer screen is viewed obliquely from the side. It is noted that in addition to the film sheet, more layers may be provided, and that an outer layer can be made of other materials such as glass.

Preferably two hook elements are used, provided at the upper edge of the screen filter and spaced uniformly from each of the vertical side edges of the screen filter. Alternatively, there is a single hook element having a width corresponding to at least 1/3 of the width of the screen filter. These variants contribute to the screen filter hanging stable at the upper edge of the computer screen.

If reinforcing plate-shaped elements mounted along the side edges of the film sheet are used, the hook elements will be provided at the upper end part of the reinforcing plate-shaped element.

The width a between the gripping part of the hook member and the plane of the screen filter is adapted to the relevant computer screen or computer model on which the screen filter is to be fitted.

Also, the height b of the hook member can vary according to computer screen or computer model.

It is preferred to make the hook member with a certain resilient yieldability such that an elastic squeezing force against the computer screen housing is found after application.

The hook can be made with an angling between the parts of the hook such that the spacing between the gripping parts of the hook member is the largest at the mouth in order to facilitate application on the computer screen housing.

In an aspect of the invention, the hook element includes at least one mounting member in the form of a male part engaging a female part at the side edge of the film sheet, as the female part is designed as a cutout at the upper edge of the film sheet with a shape corresponding to the shape of the male part, and where the female part allows insertion of the male part in a direction perpendicular to the plane of the film sheet, at the same time preventing the male part from being removed from the female part in a direction in the plane of the film sheet when the one or to reinforcing plate-shaped elements are fitted along the front side and/or the back side of the upper edge of the film sheet. The risk of the hook element being released from the screen filter is hereby obviated.

In a further aspect of the invention, two reinforcing plate-shaped elements are applied which are mounted along the front side and the back side of the upper edge of the film sheet or the side edges of the film sheet such that the mounting member of the at least one hook element is clamped between the reinforcing plates. This provides a particularly good reinforcement of the filter and retention of the hook element in the screen filter.

In a further aspect of the invention, the at least one reinforcing plate-shaped element is mounted along the front side and/or the back side of the upper edge of the film sheet or the side edges of the film sheet by gluing. This a simple way of secure fastening of the reinforcing plates on the film sheet.

The hook elements are secured to the film part by engagement with the upper edge of the film sheet. The hook element includes at least one mounting part in the form of a male part engaging a female part in the film sheet. The hook elements may alternatively be fastened to a reinforcing plate.

The male part is an integrated part of the hook member and parallel or at least substantially parallel with the gripping part of the hook. The male part preferably has a design in that the outer and thereby lowermost part of the male part are provided increased width in at least one, preferably both lateral directions relative to the uppermost and narrower part of the male part. The shape of the outermost wide part of the male part is not important and can be adapted to the production. It is thus possible that the outer part is edged, e.g. square, rhombic, rectangular or alternatively round or oval.

If a single wide hook element is used, this will preferably include two or more mounting parts. These mounting parts are then preferably disposed with uniform spacing in order to ensure stability in the screen filter construction.

The female part is designed as a cutout in the upper edge of the film sheet with a shape corresponding to the shape of the male part. The female part thereby allows insertion of the male part in a direction perpendicular to the plane of the film sheet while at the same time the male part can be taken out of the female part in a direction in the plane of the film sheet, e.g. if pulling downwards in the film sheet.

The number and disposition of female parts are adapted to the number of male parts and relative to the total width of the screen filter and thereby also to the width of the relevant computer or computer screen model to which the filter is produced. This contributes to the screen filter hanging stable at the upper edge of the computer screen.

The reinforcing plate-shaped elements of the screen filter mounted along the front side and back side of the upper edge of the film sheet preferably have the same width as the width of the film sheet. This will contribute to protect corners and upper edge of the screen filter. When using two reinforcing plates, this will ensure clamping of the film sheet and retention of the male parts of the hook elements in the female parts in the film sheet between the reinforcing plates.

The reinforcing plates can be fastened to the film sheet and possibly to each other in commonly known ways, e.g. by gluing, click-lock elements, rivets, screws, etc.

Hook members and reinforcing plates are preferably made of plastic, e.g. ABS plastic (acrylonitrile butadiene styrene copolymer) or metal, e.g. aluminium, iron or steel. The hook members are preferably of metal as this reduces the risk of breakage of the hook members.

It is preferred that the inner side of the hook part, which is adapted to be in contact with the housing of the computer screen, includes a coating. The coating serves to reduce or eliminate the risk of the gripping part of the hook scratching the computer screen housing. The coating can be in the form of a layer, stripes or knobs. The coating material is typically a plastic or rubber selected such that the coating is of a softer material than the computer screen housing in order to avoid scratches on computer screen housing. In a specific embodiment, flannelette is used for the coating.

The back side of the upper rear reinforcing plate can be designed with a corresponding coating in order to reduce the risk of scratches appearing at the edges of the computer screen when using the screen filter.

The screen filter preferably also includes at least one and preferably two lower reinforcing plate-shaped elements which are mounted along the front side and back side of the lower edge of the film sheet, and preferably approximately over the entire width of the film sheet. The stability of the screen filter is increased hereby. Moreover, protection of the lowermost edge of the screen filters is achieved, implying longer service life of the screen filter. In addition, the lowermost reinforcing edge provides weight at the bottom of the screen filter, contributing to the screen filter lying correctly on the computer screen and such that it cannot or only to a limited degree can flutter, e.g. associated with a draft or wind.

The two lower reinforcing plates are similarly mounted as described above in connection with the upper reinforcing plates.

Alternatively, the lower reinforcing plates can be connected along the lower edge of the screen filter for forming a U-profile. This U-profile can be mounted in the same way as described above, or possibly the U-profile is squeezed around the lowermost edge of the film sheet for simple and easy fastening.

The back side of the lower rearmost reinforcing plate can be designed with a corresponding scratch-reducing coating as described above.

Adhesive pads may be provided for retaining the lowermost part of the screen filter against the edges of the computer screen. The risk of the screen filter being inadvertently swung out from the edge of the computer screen is hereby reduced. These adhesive pads can be glue pads or Velcroband®.

The screen filter according to the invention takes up sufficiently little of the total thickness in order that the user can let the screen filter be mounted on the computer screen of the portable computer and fold it around the screen filter without harming the computer or screen filter. However, it is preferred to dismount the screen filter before folding.

Some computer models, including particularly portable computers, have control buttons or rubber knobs, projections or locking mechanisms at one or more edge areas around the computer screen, e.g. for operating or closing the portable computer. In order to ensure operation and correct closing it is therefore preferred that the upper and/or lower reinforcing plates and/or the film sheet include(s) cutouts at the relevant areas of the screen filter, corresponding to the areas where such control buttons, locking mechanisms and/or rubber knobs are located on the edge areas of the computer screen.

### Description of the Drawing

The invention will now be explained below with reference to the drawing, where:
- Fig. 1: shows a schematic drawing of a screen filter according to the invention in a front view;
- Fig. 2: shows a schematic drawing of a screen filter according to the invention in a side view;
- Figs. 3a-d: show mounting of a screen filter according to the invention on a portable computer;
- Figs. 4a-d: show the screening effect of the screen filter in relation to the angle at which the computer screen is viewed;
- Fig. 5: shows the film sheet of the screen filter, as seen from the front;
- Figs. 6a-b: show variants of the hook elements;
- Fig. 7a: shows a possible embodiment of the screen filter according to the invention in perspective view;
- Fig. 7b: shows the embodiment on Fig. 7a, as seen from the side;
- Fig. 7c: shows a detail of a variant of lower reinforcing edges on the screen filter;
- Fig. 8a: shows the through-going hole for camera with a sliding closure;
- Fig. 8b: shows the through-going hole for camera and/or possible sensors;
- Fig. 9: shows the slide provided in the through-going holer for camera;
- Fig. 10: shows a schematic drawing of a screen filter according to the invention in a front view; and
- Fig. 11: shows a schematic drawing of a screen filter according to the invention in a side view.

It is noted that identical elements in the drawings have identical numbers. Details of individual drawings of the invention will therefore not necessarily be mentioned in connection with all drawings.

### Detailed Description of Embodiments of the Invention

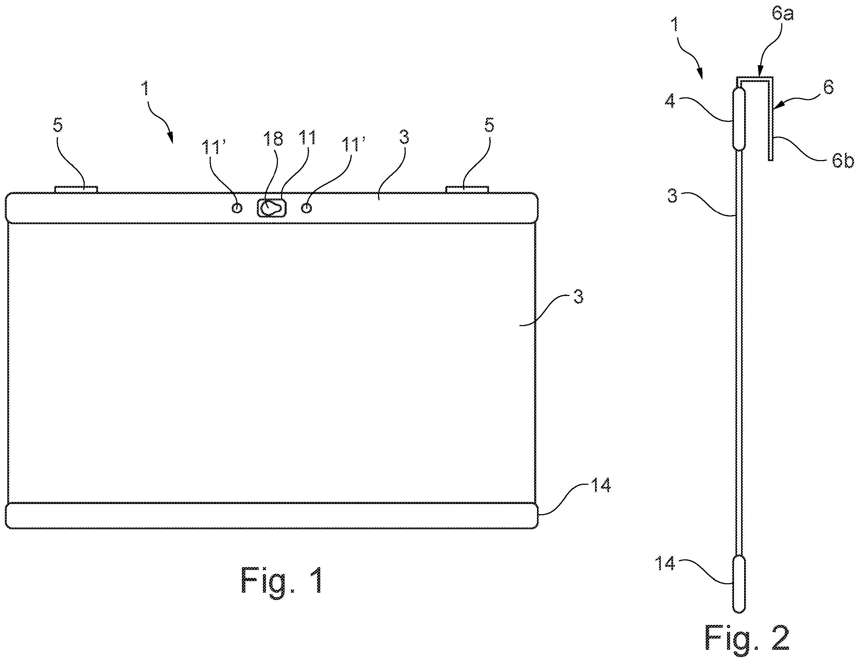

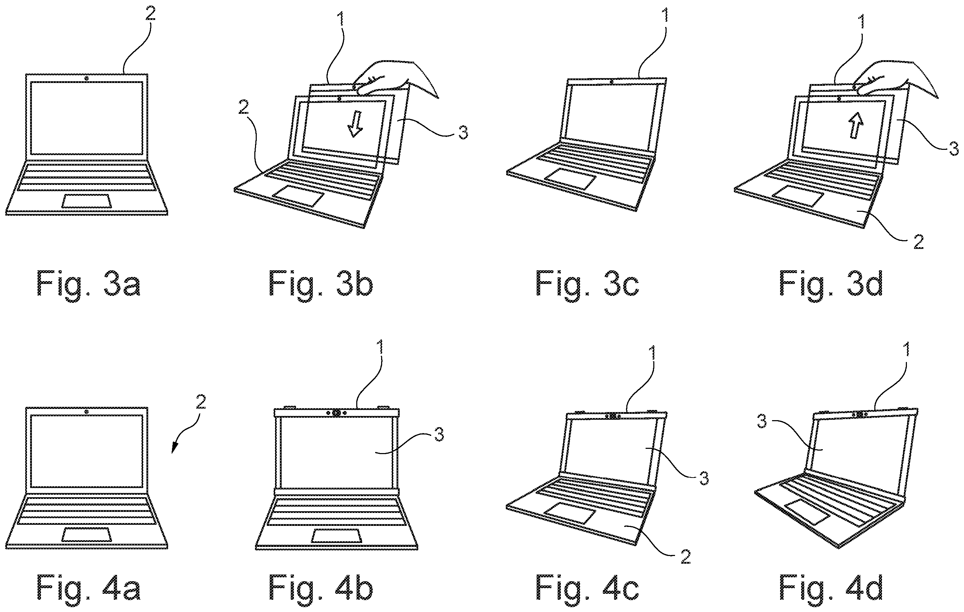

Fig. 1 shows in principle a privacy screen filter 1. The screen filter 1 is adapted for mounting on screens of computers, including particularly computer screens on portable computers such as laptops and/or tablet pcs. Figs. 3a-3d show how the screen filter can be fitted on and removed from a portable computer and Figs. 4a-4d illustrate the effect of the screen filter compared to a computed without screen filter (Fig. 4a), viewed directly from the front (Fig. 4b) and viewed from the side at increasing angles (Figs. 4c-d). The screen filter 1 includes a filter element in the form of a film sheet 3 with means to prevent other than the user to see the contents on the computer screen, e.g. as described above.

The screen filter 1 has mounting means in the form of one or more hook elements 5 along the upper edge of the screen filter 1 for releasable fastening of the screen filter on the upper edge of the computer screen. Each hook element 5 is adapted to grip over the upper horizontal edge of the computer screen with a hook member 6.

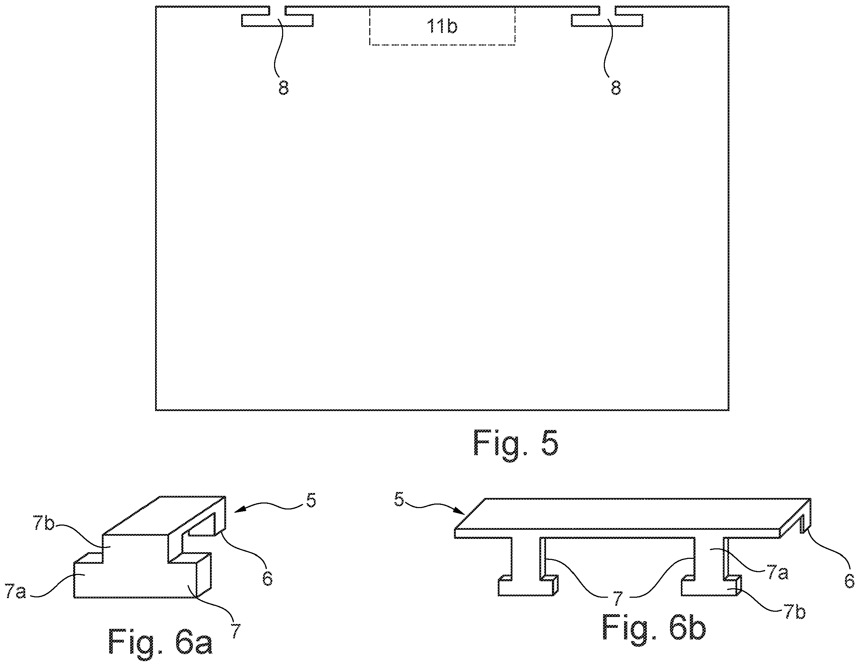

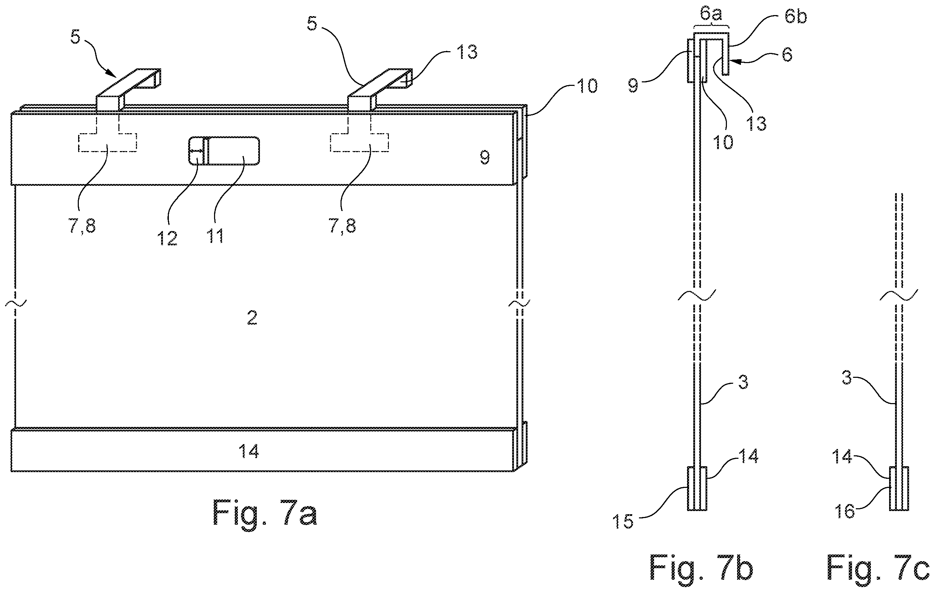

The hook elements 5 engage the upper edge of the film sheet 3 as the hook element 5 includes at least one mounting part in the form of a male part 7 (see Figs. 6a-b and 7) engaging a female part 8 in the film sheet 3 (Figs. 5 and 7).

Preferably at least two, possibly three, four or more hook elements 5 are used, located at the upper edge of the screen filter 1 with equal spacing from each of the vertical side edges of the screen filter, as shown on Figs. 1 and 7a. Alternatively, there is a single hook element with a width corresponding to at least ¼ or 1/3 of the width of the screen filter, see Fig. 6b, which e.g. includes two or more male parts 7.

The width between the gripping part 6b of the hook member and the plane of the screen filter is adapted to the relevant computer screen or computer model on which the screen filter 1 is to be fitted. This can be effected by making hook elements 5 with a spacer part 6a adapted in length to the computer model or computer screen model.

Also, the height of the gripping part 6b of the hook member can vary according to computer screen or computer model.

The male part 7 is an integrated part of the hook element 5 and parallel or at least substantially parallel with the gripping part 6b of the hook. The male part 7 is preferably designed by the outer and thereby lowermost part 7a of the male part having increased width in at least one, or both lateral directions relative to the uppermost and narrower part 7b of the male part 7, se particularly Figs. 6a-b and 7a.

The shape of the outermost wide part of the male part is not important and can be adapted to the production as mentioned above.

If a single wide hook element is used, see Fig. 6b, this will preferably include two or more mounting parts 7. These mounting parts 7are then preferably disposed with uniform spacing.

The female part in the assembly is designed as a cutout 8 in the upper edge of the film sheet 3 with a shape corresponding to the shape of the male part 7. The female part 8 allows insertion of the male part 8 in a direction perpendicular to the plane of the film sheet, simultaneously preventing that the male part 7 can be taken out of the female part in a direction in the plane of the film sheet.

The screen filter 1 additionally includes a top strip 4 formed of two reinforcing plate-shaped elements 9, 10 that are mounted along the front side and back side of the upper edge of the film strip 3 for holding the film sheet 3 and the mounting part(s) 7 of the at least one hook element between the reinforcing plates 9, 10.

The number and disposition of female parts 8 are adapted to the number of male parts 7 and dimensioned relative to the total width of the screen filter 1.

The upper reinforcing plates 9, 10 preferably have the same width as the width of the film sheet 3 and are fastened as described above.

In order to ensure that a camera and/or possible sensors are not covered by the upper reinforcing plates 9, 10 of the screen filter and the film sheet 3, the upper reinforcing plates 9, 10 and the film sheet 3 include at least one through-going hole/aperture 11 and 11' respectively, through all three layers. This through-going holee 11 is disposed in an area in which a camera 18 (see Figs. 1 and 7a) and/or a sensor (at 11') is mounted in the edge frame of the computer screen.

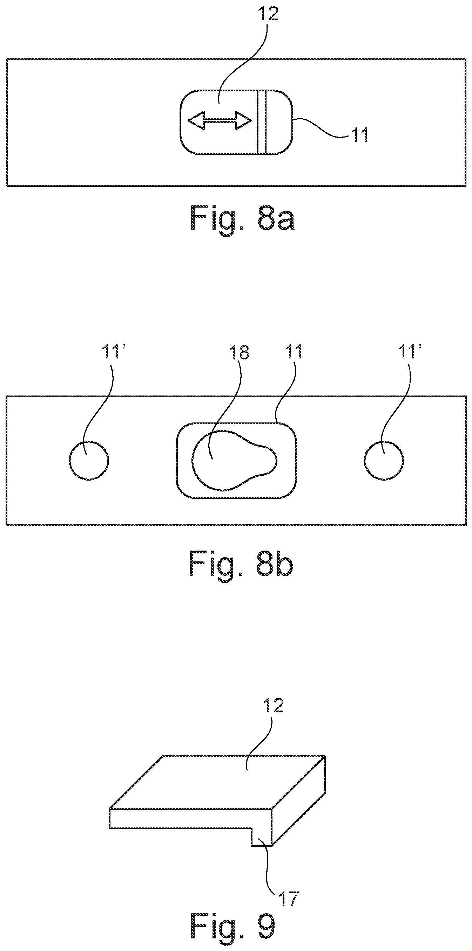

A movable slide 12, see Figs. 7a, 8a, 9, is preferably mounted in the through-going hole in connection with the through-going hole 11. The movable slide 12 can close the through-going hole or allow the through-going hole to be free as illustrated by arrows in Figs. 7a-8a. The slide 12 is arranged to slide back and forth or up and down in the through-going hole 11.

The slide 12 is preferably loosely placed in the through-going hole 11b (see Fig. 5) in the film sheet 3. The slide 12 preferably has a thickness which is less than the thickness of the film sheet 3. The through-going hole in the film sheet 11b is therefore preferably larger than the through-going holes 11 in the front and rear upper reinforcing plates. The through-going hole 11b in the film sheet therefore also has a size and a shape that allows the slide to be slid up/down or sideways back/forth, thereby freeing a substantial part of the through-going hole in front of camera 18 and/or sensors, or covering the through-going hole 11 in front of camera and/or sensors 18.

As a not shown alternative variant, the back side of the foremost upper reinforcing plate can have a depression in the area around the through-going hole 11, allowing the slide 12 to lie in the depression and be pushed back/forth or up/down.

The slide 12 preferably includes a control handle 17 with a height exceeding the thickness of the foremost reinforcing plate 9.

It is preferred that the inner side of the gripping part 6b of the hook includes a coating (not shown). The coating serves to reduce or eliminate the risk of the gripping part of the hook scratching the computer screen housing. The coating can be in the form of a layer, stripes or knobs and of a material as described above.

Additionally, the back side of the upper rear reinforcing plate 10 and lower rear reinforcing plate 16 (see below) can be designed with a corresponding coating in order to reduce the risk of scratches appearing at the edges of the computer screen when using the screen filter.

The screen filter 1 preferably also includes a bottom strip 14 formed of at least one and preferably two lower reinforcing plate-shaped elements 15, 16, which are mounted along the front side and back side of the lower edge of the film sheet 3, see Fig 7b. The two lower reinforcing plates 15, 16 are preferably mounted in a corresponding way as described above in connection with the upper reinforcing plates 9, 10.

Alternatively, the lower reinforcing plates can be connected along the lower edge of the screen filter for forming a U-profile, see Fig 7c. This U-profile can be mounted in the same way as described above, or possibly the U-profile is squeezed around the lowermost edge of the film sheet 3.

In order to ensure operation and correct closing, it is therefore preferred that the upper 9, 10 and/or lower 15, 16 reinforcing plates and/or the film sheet 3 include(s) not shown cutouts at the relevant areas of the screen filter 1, corresponding to the areas where such control knobs, locking mechanisms and/or rubber knobs are located on the edge areas of the computer screen.

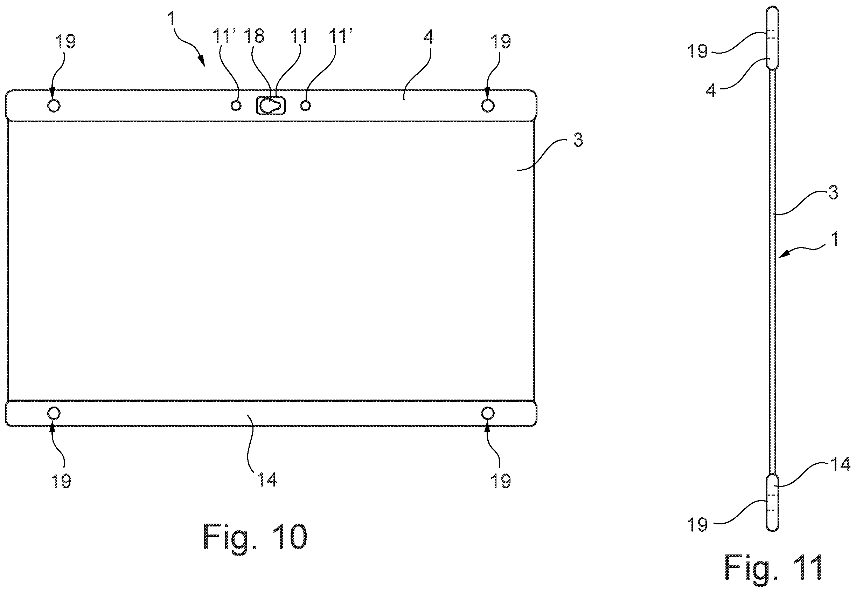

Fig. 10 shows in principle a privacy screen filter 1. The screen filter 1 is adapted for mounting on screens of computers, including particularly computer screens on portable computers such as laptops and/or tablet pcs. The screen filter 1 has mounting means in the form of magnets 19 for releasable fastening of the screen filter on the computer screen frame.

The magnets 19 are shown located at each end of the top strip 4 and the bottom strip 14.

However, a different number and different location of the magnets in the top and bottom strips can be applied.

The magnets may thus be disposed at the side edges of top and bottom strips as well, instead of on the side face.

### List of reference numbers:

- 1.: screen filter
- 2.: portable computer
- 3.: film, filter element
- 4.: top strip
- 5.: hook elements
- 6.: hook member
- a.: spacer part of hook
- b.: gripping part of hook
- 7.: mounting part, male part
- a.: outer end
- b.: uppermost narrow part
- 8.: female part on film, cutout
- 9.: first reinforcing plate-shaped element of top strip
- 10.: second reinforcing plate-shaped element of top strip
- 11.: through-going hole for camera/sensors
- a.: in plates
- b.: in film sheet
- 12.: slide in through-going hole for camera
- 13.: coating on hook element
- 14.: bottom strip
- 15.: first reinforcing plate-shaped element of bottom strip
- 16.: second reinforcing plate-shaped element of bottom strip
- 17.: control handle on slide
- 18.: camera in portable computer
- 19.: magnets

## Claims

1. A privacy screen filter (1) for mounting on screens of computers, including computer screens on portable computers (2) such as laptops and/or tablet pcs, on which a camera and/or a sensor is mounted in the computer screen, such as in the edge frame of the computer screen, and wherein the screen filter (1) includes a filter element (3) in the form of a film sheet (3) with means to prevent others than the user to see the contents on the computer screen, such as a film sheet (3) including micro-lamellae and one or more mounting means for releasable fastening of the screen filter (1) along at least one edge of the computer screen, wherein the privacy screen filter (1) additionally includes one or more reinforcing plate-shaped elements (9, 10) mounted along the front side and/or the back side of the upper and lower edges of the film sheet (3) or of the side edges of the film sheet (3), and across the entire width and height, respectively, of the film sheet (3) for reinforcing the film sheet (3), **characterised in that** the reinforcing plate-shaped elements (9, 10) and the film sheet (3) along at least one edge of the film sheet include a through-going hole (11), and wherein the privacy screen filter further comprises a movable slide (12) mounted in connection with the through-going hole (11), wherein the movable slide (12) is configured to close the through-going hole (11) or to allow the through-going hole (11) to be free.

2. A privacy screen filter (1) according to claim 1, **characterised in that** the movable slide (12) is loosely placed in the through-going hole (11) in the film sheet (3), having a thickness that is less than the thickness of the film sheet (3), wherein the movable slide (12) preferably also includes an control handle (17) with a height exceeding the thickness of the foremost reinforcing plate (9).

3. A privacy screen filter according to claim 1 or 2, **characterised in that** the mounting means include one or more hook elements (5), wherein the hook elements (5) are configured to engage the upper edge of the film sheet (3) or the reinforcing plate-shaped elements (9, 10).

4. A privacy screen filter (1) according to claim 3, **characterised in that** the hook element (5) includes at least one mounting member (7) in the form of a male part (7a) engaging a female part (8) at the side edge of the film sheet (3), wherein the female part (8) is designed as a cutout at the upper edge of the film sheet (3) with a shape corresponding to the shape of the male part (7a), and wherein the female part (8) is configured to allow insertion of the male part (7) in a direction perpendicular to the plane of the film sheet (3), and at the same time preventing the male part (7a) from being removed from the female part (8) in a direction in the plane of the film sheet (3) when the one or two reinforcing plate-shaped elements (9, 10) are fitted along the front side and/or the back side of the upper edge of the film sheet (3).

5. A privacy screen filter (1) according to claim 4, **characterised in that** two reinforcing plate-shaped elements (9, 10) are mounted along the front side and the back side of the upper edge of the film sheet (3) or the side edges of the film sheet (3) such that the mounting member (7) of the at least one hook element (5) is clamped between the reinforcing plates (9, 10).

6. A privacy screen filter according to claim 1 or 2, **characterised in that** the mounting means include magnets (19).

7. A privacy screen filter according to claim 6, **characterised in that** two or more magnets (19) are embedded in the reinforcing plate-shaped elements (9, 10, 15, 16), wherein the reinforcing plate-shaped elements (9, 10, 15, 16) are mounted along the front side and/or the back side of the edges of the film sheet (3).

8. A privacy screen filter (1) according to any preceding claim, **characterised in that** the at least one reinforcing plate-shaped element (9, 10) is mounted along the front side and/or the back side of the upper edge of the film sheet (3) or the side edges of the film sheet (3) by gluing.

9. A privacy screen filter (1) according to any preceding claim 1-6, **characterised in that** the inner side of the hook part (6) is adapted to be in contact with the housing of the computer screen and includes a coating (13).

10. A privacy screen filter (1) according to any preceding claim, **characterised in that** the screen filter (1) further includes at least one and preferably two lower reinforcing plate-shaped elements (15, 16) mounted along the front side and the back side of the lower edge of the film sheet (3), preferably across the entire width of the film sheet (3), wherein the two lower reinforcing plate-shaped elements (15, 16) are connected along the lower edge of the privacy screen filter (1) for forming a U-shaped lower reinforcing strip (14).

11. A privacy screen filter (1) according to any preceding claim, **characterised in that** the upper and/or lower reinforcing plate-shaped elements (9, 10, 15, 16) and/or the film sheet (3) include cut-outs in areas where the edge of the computer screen include control buttons or rubber knobs, projections or locking mechanisms for use when closing a portable computer.

## Patentansprüche

1. Sichtschutzschirm (1) zum Anbringen an Bildschirmen von Computern, einschließlich Computerbildschirmen an tragbaren Computern (2), wie etwa Laptops und/oder Tablets, an denen eine Kamera und/oder ein Sensor in dem Computerbildschirm angebracht ist, wie etwa in der Randfassung des Computerbildschirms, und wobei der Sichtschutzschirm (1) ein Filterelement (3) in Form einer Folienbahn (3) mit Mitteln zum Verhindern, dass andere als der Benutzer die Inhalte auf dem Computerbildschirm sehen, beinhaltet, wie etwa eine Folienbahn (3) mit Mikrolamellen und einem oder mehreren Anbringungsmitteln zum lösbaren Befestigen des Sichtschutzschirms (1) entlang mindestens einer Kante des Computerbildschirms, wobei der Sichtschutzschirm (1) für Privatsphäre zusätzlich ein oder mehrere verstärkende plattenförmige Elemente (9, 10) beinhaltet, die entlang der Vorderseite und/oder der Rückseite der oberen und unteren Kante der Folienbahn (3) oder der Seitenkanten der Folienbahn (3) und über die gesamte Breite bzw. Höhe der Folienbahn (3) angebracht sind, um die Folienbahn (3) zu verstärken,
**dadurch gekennzeichnet, dass**
die verstärkenden plattenförmigen Elemente (9, 10) und die Folienbahn (3) entlang mindestens einer Kante der Folienbahn ein Durchgangsloch (11) beinhalten, und
wobei der Sichtschutzschirm für Privatsphäre ferner einen bewegbaren Schieber (12) umfasst, der in Verbindung mit dem Durchgangsloch (11) angebracht ist, wobei der bewegbare Schieber (12) dazu konfiguriert ist, das Durchgangsloch (11) zu schließen oder zuzulassen, dass das Durchgangsloch (11) frei ist.

2. Sichtschutzschirm (1) für Privatsphäre nach Anspruch 1, **dadurch gekennzeichnet, dass** der bewegbare Schieber (12) lose in dem Durchgangsloch (11) in der Folienbahn (3) angeordnet ist, wobei er eine Dicke aufweist, die geringer als die Dicke der Folienbahn (3) ist, wobei der bewegbare Schieber (12) vorzugsweise auch einen Bediengriff (17) mit einer Höhe, die die Dicke der vordersten verstärkenden Platte (9) überschreitet, beinhaltet.

3. Sichtschutzschirm für Privatsphäre nach Anspruch 1 oder 2, **dadurch gekennzeichnet, dass** die Anbringungsmittel ein oder mehrere Hakenelemente (5) beinhalten, wobei die Hakenelemente (5) dazu konfiguriert sind, in die obere Kante der Folienbahn (3) oder die verstärkenden plattenförmigen Elemente (9, 10) einzugreifen.

4. Sichtschutzschirm (1) für Privatsphäre nach Anspruch 3, **dadurch gekennzeichnet, dass** das Hakenelement (5) mindestens ein Anbringungselement (7) in Form eines vorstehenden Teils (7a), das an der Seitenkante der Folienbahn (3) in ein aufnehmendes Teil (8) eingreift, beinhaltet, wobei das aufnehmende Teil (8) als ein Ausschnitt an der oberen Kante der Folienbahn (3) mit einer Form entsprechend der Form des vorstehenden Teils (7a) ausgelegt ist, und wobei das aufnehmende Teil (8) dazu konfiguriert ist, ein Einsetzen des vorstehenden Teils (7) in einer Richtung senkrecht zu der Ebene der Folienbahn (3) zuzulassen und gleichzeitig zu verhindern, dass das vorstehende Teil (7a) aus dem aufnehmenden Teil (8) in einer Richtung in der Ebene der Folienbahn (3) entfernt wird, wenn das eine verstärkende plattenförmige Element oder zwei verstärkende plattenförmige Elemente (9, 10) entlang der Vorderseite und/oder der Rückseite der oberen Kante der Folienbahn (3) eingepasst sind.

5. Sichtschutzschirm (1) für Privatsphäre nach Anspruch 4, **dadurch gekennzeichnet, dass** zwei verstärkende plattenförmige Elemente (9, 10) entlang der Vorderseite und der Rückseite der oberen Kante der Folienbahn (3) oder der Seitenkanten der Folienbahn (3) angebracht sind, sodass das Anbringungselement (7) des mindestens einen Hakenelements (5) zwischen die verstärkenden Platten (9, 10) geklemmt ist.

6. Sichtschutzschirm für Privatsphäre nach Anspruch 1 oder 2, **dadurch gekennzeichnet, dass** die Anbringungsmittel Magnete (19) beinhalten.

7. Sichtschutzschirm für Privatsphäre nach Anspruch 6, **dadurch gekennzeichnet, dass** zwei oder mehr Magnete (19) in die verstärkenden plattenförmigen Elemente (9, 10, 15, 16) eingebettet sind, wobei die verstärkenden plattenförmigen Elemente (9, 10, 15, 16) entlang der Vorderseite und/oder der Rückseite der Kanten der Folienbahn (3) angebracht sind.

8. Sichtschutzschirm (1) für Privatsphäre nach einem der vorstehenden Ansprüche, **dadurch gekennzeichnet, dass** mindestens ein verstärkendes plattenförmiges Element (9, 10) entlang der Vorderseite und/oder der Rückseite der oberen Kante der Folienbahn (3) oder der Seitenkanten der Folienbahn (3) durch Kleben angebracht ist.

9. Sichtschutzschirm (1) für Privatsphäre nach einem der vorstehenden Ansprüche 1-6, **dadurch gekennzeichnet, dass** die Innenseite des Hakenteils (6) angepasst ist, um mit dem Gehäuse des Computerbildschirms in Kontakt zu sein, und eine Beschichtung (13) beinhaltet.

10. Sichtschutzschirm (1) für Privatsphäre nach einem der vorstehenden Ansprüche, **dadurch gekennzeichnet, dass** der Sichtschutzschirm (1) ferner mindestens ein und vorzugsweise zwei untere verstärkende plattenförmige Elemente (15, 16) beinhaltet, die entlang der Vorderseite und der Rückseite der unteren Kante der Folienbahn (3), vorzugsweise über die gesamte Breite der Folienbahn (3), angebracht sind, wobei die zwei unteren verstärkenden plattenförmigen Elemente (15, 16) entlang der unteren Kante des Sichtschutzschirms (1) für Privatsphäre verbunden sind, um einen U-förmigen unteren verstärkenden Streifen (14) zu bilden.

11. Sichtschutzschirm (1) für Privatsphäre nach einem der vorstehenden Ansprüche, **dadurch gekennzeichnet, dass** die oberen und/oder unteren verstärkenden plattenförmigen Elemente (9, 10, 15, 16) und/oder die Folienbahn (3) Ausschnitte in Bereichen beinhalten, in denen die Kante des Computerbildschirms Bedientasten oder Gummiknöpfe, Vorsprünge oder Verriegelungsmechanismen zur Verwendung beim Schließen eines tragbaren Computers beinhaltet.

## Revendications

1. Filtre d'écran de confidentialité (1) pour montage sur des écrans d'ordinateur, incluant des écrans d'ordinateur sur des ordinateurs portables (2) tels qu'ordinateurs bloc-notes et/ou tablettes, sur lequel une caméra et/ou un capteur est monté dans l'écran d'ordinateur, tel que dans le cadre périphérique de l'écran d'ordinateur, et dans lequel le filtre d'écran (1) inclut un élément de filtre (3) sous la forme d'une feuille de film (3) avec des moyens pour empêcher des personnes autres que l'utilisateur de voir le contenu sur l'écran d'ordinateur, tel qu'une feuille de film (3) incluant des micro-lamelles et un ou plusieurs moyens de montage pour fixation amovible du filtre d'écran (1) le long d'au moins un bord de l'écran d'ordinateur, dans lequel le filtre d'écran de confidentialité (1) inclut par ailleurs un ou plusieurs éléments en forme de plaque de renfort (9, 10) montés le long du côté avant et/ou du côté arrière des bords supérieur et inférieur de la feuille de film (3) ou des bords latéraux de la feuille de film (3), et sur la largeur et la hauteur totales, respectivement, de la feuille de film (3) pour renforcer la feuille de film (3),
**caractérisé en ce que**
les éléments en forme de plaque de renfort (9, 10) et la feuille de film (3) le long d'au moins un bord de la feuille de film incluent un trou traversant (11), et
dans lequel le filtre d'écran de confidentialité comprend en outre une glissière mobile (12) montée en liaison avec le trou traversant (11), dans lequel la glissière mobile (12) est conçue pour fermer le trou traversant (11) ou pour permettre au trou traversant (11) d'être libre.

2. Filtre d'écran de confidentialité (1) selon la revendication 1, **caractérisé en ce que** la glissière mobile (12) est placée de manière lâche dans le trou traversant (11) dans la feuille de film (3), ayant une épaisseur qui est inférieure à l'épaisseur de la feuille de film (3), dans lequel la glissière mobile (12) inclut également de préférence une poignée de commande (17) avec une hauteur dépassant l'épaisseur de la plaque de renfort (9) la plus en avant.

3. Filtre d'écran de confidentialité (1) selon la revendication 1 ou 2, **caractérisé en ce que** les moyens de montage incluent un ou plusieurs éléments formant crochets (5), dans lequel les éléments formant crochets (5) sont conçus pour se mettre en prise avec le bord supérieur de la feuille de film (3) ou les éléments en forme de plaque de renfort (9, 10).

4. Filtre d'écran de confidentialité (1) selon la revendication 3, **caractérisé en ce que** l'élément formant crochet (5) inclut au moins un élément de montage (7) sous la forme d'une partie mâle (7a) se mettant en prise avec une partie femelle (8) au niveau du bord latéral de la feuille de film (3), dans lequel la partie femelle (8) est conçue sous forme d'une découpe au niveau du bord supérieur de la feuille de film (3) avec une forme correspondant à la forme de la partie mâle (7a), et dans lequel la partie femelle (8) est conçue pour permettre l'insertion de la partie mâle (7) dans une direction perpendiculaire au plan de la feuille de film (3), et empêchant en même temps la partie mâle (7a) d'être retirée de la partie femelle (8) dans une direction dans le plan de la feuille de film (3) lorsque les un ou deux éléments en forme de plaque de renfort (9, 10) sont installés le long du côté avant et/ou du côté arrière du bord supérieur de la feuille de film (3).

5. Filtre d'écran de confidentialité (1) selon la revendication 4, **caractérisé en ce que** deux éléments en forme de plaque de renfort (9, 10) sont montés le long du côté avant et du côté arrière du bord supérieur de la feuille de film (3) ou des bords latéraux de la feuille de film (3) de telle sorte que l'élément de montage (7) de l'au moins un élément formant crochet (5) est immobilisé entre les plaques de renfort (9, 10).

6. Filtre d'écran de confidentialité (1) selon la revendication 1 ou 2, **caractérisé en ce que** les moyens de montage incluent des aimants (19).

7. Filtre d'écran de confidentialité (1) selon la revendication 6, **caractérisé en ce que** deux aimants (19) ou plus sont encastrés dans les éléments en forme de plaque de renfort (9, 10, 15, 16), dans lequel les éléments en forme de plaque de renfort (9, 10, 15, 16) sont montés le long du côté avant et/ou du côté arrière des bords de la feuille de film (3).

8. Filtre d'écran de confidentialité (1) selon une quelconque revendication précédente, **caractérisé en ce que** l'au moins un élément en forme de plaque de renfort (9, 10) est monté le long du côté avant et/ou du côté arrière du bord supérieur de la feuille de film (3) ou des bords latéraux de la feuille de film (3) par collage.

9. Filtre d'écran de confidentialité (1) selon une quelconque revendication 1 à 6 précédente, **caractérisé en ce que** le côté interne de la partie crochet (6) est adapté pour être en contact avec le boîtier de l'écran d'ordinateur et inclut un revêtement (13) .

10. Filtre d'écran de confidentialité (1) selon une quelconque revendication précédente, **caractérisé en ce que** le filtre d'écran (1) inclut en outre au moins un et de préférence deux éléments en forme de plaque de renfort (15, 16) montés le long du côté avant et du côté arrière du bord inférieur de la feuille de film (3), de préférence sur la largeur totale de la feuille de film (3), dans lequel les deux éléments en forme de plaque de renfort inférieurs (15, 16) sont raccordés le long du bord inférieur du filtre d'écran de confidentialité (1) pour former une bande de renfort inférieure en forme de U (14).

11. Filtre d'écran de confidentialité (1) selon une quelconque revendication précédente, **caractérisé en ce que** les éléments en forme de plaque de renfort supérieurs et/ou inférieurs (9, 10, 15, 16) et/ou la feuille de film (3) incluent des découpes dans des zones où le bord de l'écran d'ordinateur inclut des boutons de commande ou des boutons en caoutchouc, des saillies ou des mécanismes de verrouillage destinés à être utilisés lors de la fermeture d'un ordinateur portable.
